# EUROPEAN PATENT SPECIFICATION

(11) **EP 3 253 223 B1**
(45) Date of publication and mention of the grant of the patent: **03.06.2020**
(21) Application number: 16703328.1
(22) Date of filing: 08.02.2016
(51) Int. Cl.: A23L 2/38, A23L 2/39, A23G 1/56

(54) **POWDERED BEVERAGE COMPOSITION**
PULVERFÖRMIGE GETRÄNKEZUSAMMENSETZUNG
COMPOSITION DE BOISSON EN POUDRE

(30) Priority: 06.02.2015 EP 15154243
(43) Date of publication of application: 13.12.2017
(73) Proprietor: Société des Produits Nestlé S.A., 1800 Vevey (CH)
(72) Inventor: ROBIN, Frédéric, 1196 Gland (CH); COMMEUREUC, Stéphanie, 1123 Aclens (CH)
(74) Representative: Cogniat, Eric Jean Marie
(86) International application number: PCT/EP2016/052651
(87) International publication number: WO 2016/124792

(56) References cited:
- WO-A1-2011/141150
- WO-A1-2012/095121
- US-A- 3 028 242
- US-A- 5 002 779
- US-A1- 2008 075 805
- US-A1- 2009 110 797
- ANONYMOUS: "Instant Cocoa Drink Powder", GNPD; MINTEL, September 2012 (2012-09), XP002731606,
- ANONYMOUS: "Chocolate Breakfast Beverage", GNPD; MINTEL, September 2012 (2012-09), XP002731605,

## Description

### TECHNICAL FIELD

The invention relates to powdered beverage compositions having a reduced sugar content, especially powdered chocolate beverage compositions.

### BACKGROUND OF THE INVENTION

Any reference to prior art documents in this specification is not to be considered an admission that such prior art is widely known or forms part of the common general knowledge in the field.

Excessive intake of sugars has been associated with an increased risk of certain non-communicable diseases (NCDs) and with increased body weight. However, this relationship is linked to higher energy intake, rather than an effect of sugars per se (Te Morenga et al., 2013). Diets that are high in energy and sugars, may lead to the development of metabolic diseases, such as insulin resistance, dyslipidaemia or hepatic fat accumulation, all of which are risk factors for cardiovascular diseases and type II diabetes. Moreover, there is evidence that the frequency of intake of sugars increases the risk of dental diseases (WHO/FAO, 2003).

Scientific evidence shows that sugars can have a harmful effect on health when they are consumed in high quantities (i.e. in excess of energy requirements). However, replacement of sugars with other caloric ingredients (e.g. fat, starch, glucose, and maltodextrins) can also have harmful effects on plasma lipids and insulin sensitivity. This reinforces the principle that dietary patterns are characterised by a high energy intake, rather than the intake of sugars specifically, is the main predictor of metabolic disease development. Nevertheless, the average intake of sugars in most countries exceeds the crew recommended daily intake issued by leading authoritative bodies.

The FAO and the WHO published an independent expert report on diet and chronic disease in 2003, which recommended that "free sugars" should provide no more than 10% of total energy requirements (FAO/WHO, 2003). In 2013, an independent review commissioned by the WHO concluded that recent scientific knowledge still supports this recommendation (Te Morenga et al., 2013). The WHO recently has issued draft proposal with the conditional recommendation that "a reduction to below 5% of total energy would have further benefits" (WHO March 5, 2014).

Despite evidence that sugars have been associated with obesity, hyperlipidaemia, and an increased risk of tooth decay, in 2002, the US Institute of Medicine (IOM) was unable to establish an upper limit for the consumption of sugars. However, the IOM recommended in 2002 that "added sugars" should supply no more than 25% of total daily energy intake (IOM, 2002/2005). Similarly, the European Food Safety Authority (EFSA) was unable to define an upper limit for the consumption of sugars due to insufficient scientific evidence (EFSA, 2010). Nevertheless, national authoritative bodies within the EU have adopted different dietary recommendations for limiting the intake of sugars, ranging between 10-15% of total energy intake from added/free sugars.

The objective of reducing the sugar intake, by reducing the "added sugars" or "free sugars" content, is clearly beneficial to reduce the calorie intake of consumers and improve the nutritional content of a product.

NESQUIK is a well-known brand of powdered chocolate beverage. Its main ingredients are cocoa, sugar, lecithin, and flavours. The fine balance between the ingredients has created an iconic taste that generations of consumers have experienced and appreciate. Very slight changes in the recipe of NESQUIK powdered chocolate beverage are immediately identified by consumers. Therefore, the sugar reduction objective must be balanced with consumer's very strong taste preferences when they drink their preferred chocolate beverage. A reduction of the sugar content may reduce the sweetness perception and increase the perception of cocoa and other flavours. Hence, consumers could be tempted to add sugar to offset the perceived reduced sweetness in the reconstituted beverage. This would be completely counterproductive in view of the sugar reduction objective. Thus, the flavour of the chocolate beverage must be as close to that of the current product as possible after reconstitution, and yet it should contain a lower amount of "added sugar" or "free sugar" than current products.

Also, sucrose is an important ingredient in the method of manufacturing of powdered chocolate beverages. Indeed, sucrose dissolves easily in milk or water, even cold. Conversely, cocoa powder is rather hydrophobic. A method of manufacturing of powdered chocolate beverages comprises an agglomeration or granulation step during which sucrose is coated with the other ingredients of the chocolate powdered beverage, such as cocoa, lecithin and flavour ingredients. This improves the reconstitution of the powdered chocolate beverage in milk or water, especially in cold milk, without the apparition of lumps. Increasing the relative amount of cocoa in the powdered beverage composition could reduce its cold solubility. Therefore, it is desirable to achieve the desired solubility of the powdered beverage composition in milk, especially in cold milk, without impact on its flavour profile despite a reduction in the sugar content.

For instance, it has been proposed to replace part of the sucrose with maltodextrins in combination with natural sweeteners. This allowed maintaining the flavour profile and cold solubility of the powdered chocolate beverage. Also, it allowed a reduction of the sugar content of the powdered chocolate beverage. However, using maltodextrins has a possible impact on the density of the powdered chocolate beverage. Consumers are used to pouring a given amount of powdered chocolate beverage in milk, for instance 1 or 2 spoonful in a bowl of milk. If the powdered chocolate beverage feels less "heavy" than usual, consumers may have a tendency to add more powdered chocolate beverage in milk than previously to maintain an acceptable taste profile. In other words, it is important to maintain the serving size. The objective of reducing the calorie intake of consumers may be missed in this situation. Also, maltodextrins contribute to the caloric content of the powdered chocolate beverage. Therefore, replacing sucrose with maltodextrin does not reduce the caloric density of the powdered chocolate beverage, although it does reduce its "added sugar" or "free sugar" content.

It is also worth remembering that powdered chocolate beverages are usually to be reconstituted in milk. Milk contains lactose, which also contributes to the sugar intake of chocolate beverages. Therefore, in order to achieve a given sugar reduction in the chocolate beverage as consumed, a greater sugar reduction must be achieved in the powdered chocolate composition.

US 2009/0110797 A1 relates to powdered cocoa compositions manufactured by water agglomeration. The dispersibility of such compositions is rather low.

WO 2011/141150 A1 discloses a cocoa powder composition which comprises a bulking polyol, such as sorbitol, erythritol, or maltitol. Other bulking agents such as inulin or polydextrose can also be considered. However, these bulking agents must be carefully managed because of potential gastrointestinal discomfort when consumed above daily recommended levels.

High intensity sweeteners or sweetness enhancers can be considered, such as in WO 2008/112966 A1, WO 2010/014813 A2, or EP 2093234. However, these ingredients cannot replace the bulk properties of sucrose, nor do they contribute to dispersibility or solubility of the chocolate powdered beverage. Finally, the amount of high intensity sweetener or sweetness enhancers is limited by regulatory authorities.

US3028242 discloses a cocoa beverage powder and method of making the same. In this document the cocoa beverage powder consists essentially of composite granules comprising approximately 100 parts, by weight of a granulated sugar, 0.5-4 parts by weight of lecithin and 8-60 parts by weight of cocoa powder; and 20-80 parts by weight of a pulverized sugar interspersed between said composite granules, said composite granules being in the form of a base of said granulated sugar having adhered thereto said lecithin and said cocoa powder being in turn adhered in substantial proportion to said lecithin.

US5002779 discloses nutritional vitamin and mineral supplemented dry beverage mix comprises: (a) 0-25% milk solids; (b) 0.05-20% flavour; (c) 10-100% RDA of an iron source; (d) 10-150% of vitamin C; and (e) 0.5-85% sweetener; where the composition contains max. 5% total water and max. 5% total fat. D4=WO2012/095121 discloses a cold dispersible cocoa powder composition comprising a defatted cocoa powder; and 30-75% bulking sugar by weight.

US2008/075805 discloses a powdered or granulated cocoa mixture containing 9 to 60% by weight (relative to the total weight of the cocoa mixture) of at least one cocoa component, 1 to 40% by weight (relative to the total weight of the cocoa mixture) of at least one additive, and 20 to 90% by weight (relative to the total weight of the cocoa mixture) palatinose.

### SUMMARY OF THE INVENTION

The object of the present invention is to improve the state of the art, and in particular to provide a powdered beverage composition that overcomes the problems of the prior art and addresses the needs described above, or at least to provide a useful alternative. In particular, it is desirable to provide a powdered chocolate composition that has a lower sugar content and calorie content than current products, without impact on the solubility of the powdered chocolate beverage composition, especially on the cold solubility, and with an acceptable flavour profile for the consumers. It is also desirable that such a powdered chocolate beverage composition has a density which is comparable to that of current products, so that consumers are not tempted to add more powdered chocolate beverage composition in their milk than previously.

The inventors were surprised to see that the object of the present invention could be achieved by the subject matter of the independent claims. The dependent claims further develop the idea of the present invention.

In particular, the inventors were able to provide a specific carbohydrate mix where sucrose is replaced at least partly with soluble dietary fibres, and still remain soluble in cold milk and contribute to the density of the powdered beverage composition.

The powdered chocolate beverage composition according to the invention comprises:
- from 15 to 30 % by weight of cocoa,
- from 20 to 65 % by weight of sugars, from 8 to 45 % by weight of resistant dextrins, and from 2 to 35 % by weight of maltodextrins, wherein total carbohydrates represent from 70 to 85 % by weight of the composition, wherein said resistant dextrins are amorphous
- from 0.90 to 1.7 % by weight of lecithin.

The powdered beverage composition may be to be reconstituted in a drinkable liquid, preferably milk. For instance, the powdered beverage composition disperses in less than 3 minutes in cold milk, in the wettability test described below.

In an embodiment, the powdered beverage composition of the invention comprises from 15 to 50 g of dietary fibres per 100 g. It may further a comprise sweetness enhancer, a high intensity sweetener, and/or a flavour modulator. The powdered beverage composition may further comprise a flavour ingredient selected from salt (NaCI), cinnamon, vanilla, and mixtures thereof. The powdered beverage composition may further contain, per 100g: 8-14 µg vitamin D, 63-72 mg vitamin C, 0.6-0.8 mg vitamin B1, 245-265 mg magnesium, 15-20 mg iron, and 6-9 mg zinc.

The resistant dextrins are amorphous.

In an embodiment, cocoa is defatted cocoa.

In a preferred embodiment, the composition is agglomerated.

Another embodiment not part of the invention proposes a method of preparing a beverage which comprises mixing a serving of a powdered beverage composition of the invention, in a drinkable liquid, wherein a serving represents from 5 to 10 g of said powdered beverage composition per 100 mL of drinkable liquid.

Another embodiment of the invention proposes a beverage which comprises from 5 to 10 g of the powdered beverage composition according to the invention, in 100mL of drinkable liquid, wherein said beverage comprises less than 10 g of total sugars per 100 mL of beverage, and less than 6 g of added sugar per 100 mL of beverage. Preferably, the drinkable liquid is milk.

These and other aspects, features and advantages of the invention will become more apparent to those skilled in the art from the detailed description of embodiments of the invention, in connection with the attached drawings.

### BRIEF DESCRIPTION OF THE DRAWINGS

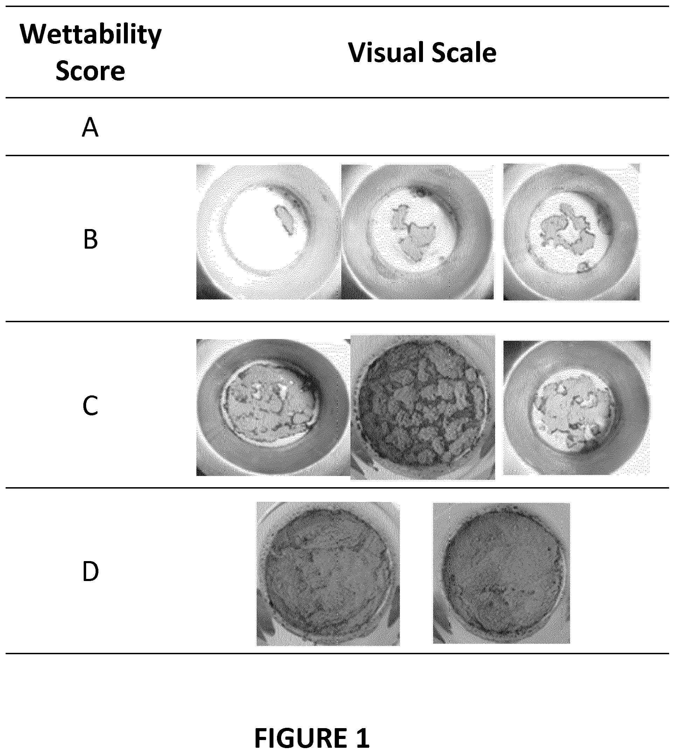

Figure 1 shows the visual scale used to assess wettability in Example 1.

### DETAILED DESCRIPTION OF THE INVENTION

The present invention is defined by the claims.

The words "comprise", "comprising" and the like are to be construed in an inclusive sense, that is to say, in the sense of "including, but not limited to", as opposed to an exclusive or exhaustive sense.

In this specification, the singular forms "a", "an", and "the" include plural referents unless the context clearly dictates otherwise.

The expressions "powdered beverage composition" and "powdered beverage" can be used interchangeably. They refer to dry powder compositions that can be used for reconstitution of a beverage into a food-grade liquid such as milk or water.

The word "sugar" refers to mono- and disaccharides commonly found in food products. Examples of monosaccharides include glucose, galactose and fructose. Examples of disaccharides include sucrose, lactose and maltose. The expression "added sugars" refers to all monosaccharides and disaccharides (glucose, fructose, sucrose, and maltose) in the powdered beverage composition, irrespective of their origin, that are added during processing or preparation of the powdered beverage. Added sugars do not include naturally occurring sugars such as lactose and galactose in milk. The expression "total sugars" refers to the sum of added sugars and naturally occurring sugars, such as galactose and lactose in milk.

The word "carbohydrates" include sugars as well as oligo- and polysaccharides, such as dextrin, maltodextrin, starches, or hydrolysed starches.

The expression "resistant dextrin" or "resistant maltodextrin" refers to a starch degradation product that is resistant to digestion and may include resistant starch. According to the EFSA Journal, resistant maltodextrin is produced by pyrolysis and enzymatic hydrolysis of cornstarch and is indigestible in the small intestine. Resistant maltodextrin has a molecular weight of 2,000. It is up to 70% soluble in water at 20°C, and produces clear solutions with very low viscosity.

The word "maltodextrin" refers to a polysaccharide produced from partial hydrolysis of starch and is easily digestible.

The expression "total carbohydrates" refers to the total amount of sugars, resistant dextrin, and maltodextrin, in the powdered beverage composition.

Unless noted otherwise, all percentages in the specification refer to weight percent and refer to the dry matter. Weight percent may be noted "wt%" or "% by weight".

Unless defined otherwise, all technical and scientific terms have and should be given the same meaning as commonly understood by one of ordinary skill in the art to which this invention belongs.

The present invention relates to a powdered beverage composition comprising cocoa, carbohydrates, and lecithin. The powdered beverage composition is a dry powdered beverage composition. The powdered beverage composition can be agglomerated, i.e. it is obtained by an agglomeration process.

The powdered beverage composition comprises from 15 to 30% by weight of cocoa. If the powdered beverage composition comprises less than 15% by weight of cocoa, there may be an issue with the flavour of the beverage after reconstitution into milk. The inventors have also found that it is difficult to disperse the powdered beverage composition in milk when the powdered beverage composition comprises more than 30% by weight of cocoa. Preferably, the powdered beverage composition comprises from 15 to 21% by weight of cocoa, and more preferably from 16 to 19% by weight of cocoa. In an embodiment, cocoa is defatted cocoa. Using defatted cocoa improves dispersibility of the powdered beverage composition. In another embodiment, cocoa is alkalised cocoa.

The powdered beverage composition also comprises carbohydrates. The carbohydrates comprise sugars, and in particular sucrose, and a carbohydrate bulking agent which comprises resistant (malto) dextrin, maltodextrin and also sugars. Taken together, total carbohydrates -i.e. sugars, resistant dextrins and maltodextrins - represent from 70 to 85% by weight of the powdered beverage composition. Individually, sugars represent 20 to 65% by weight of the powdered beverage composition, resistant dextrin represent from 8 to 45% by weight of the powdered beverage composition, and maltodextrins represent from 2 to 35% by weight of the powdered beverage composition.

Preferably, the powdered beverage composition comprises from 20 to 50% by weight of sugars, and more preferably from 25 to 40% by weight of sugars. Preferably, the powdered beverage composition comprises from 15 to 45% by weight of resistant dextrins, more preferably from 20 to 44% by weight of resistant dextrins, even more preferably from 25 to 43% by weight of resistant dextrins, and most preferably from 30 to 42% by weight of resistant dextrins. Preferably, the powdered beverage composition comprises for from 5 to 35% by weight of maltodextrins, more preferably from 10 to 25% by weight of maltodextrins, and even more preferably from 10 to 15% by weight of maltodextrins. Total carbohydrates represent from 70 to 85% by weight, and more preferably from 78 to 84% by weight of the powdered beverage composition.

In an embodiment, the powdered beverage composition comprises from 20 to 50% by weight of sugars, from 15 to 45% by weight of resistant dextrins, and from 5 to 35% by weight of maltodextrins. In a preferred embodiment, the powdered beverage composition comprises from 25 to 40% by weight of sugars, from 20 to 44% by weight of resistant dextrins, and from 10 to 25% by weight of maltodextrins. In a more preferred embodiment, the powdered beverage composition comprises from 25 to 40% by weight of sugars, from 25 to 43% by weight of resistant dextrins, and from 10 to 15% by weight of maltodextrins. In a most preferred embodiment, the powdered beverage composition comprises from 25 to 40% by weight of sugars, from 30 to 42% by weight of resistant dextrins, and from 10 to 15% by weight of maltodextrins. Preferably, total carbohydrates represent from 78 to 84% by weight of the powdered beverage composition, and even more preferably from 79 to 83% by weight of the powdered beverage composition.

It is worth noting that sugars represent less than 65% by weight, and preferably less than 50% by weight of the powdered beverage composition, and even as low as 20% by weight of the powdered beverage composition. This is a tremendous reduction in the sugars content of powdered beverage compositions, especially chocolate powdered beverage compositions, when compared with current products. Indeed, some chocolate powdered beverage compositions contain up to 80% by weight of sucrose. Hence, when compared with prior art compositions, sugars, especially sucrose, are partly replaced with the carbohydrate bulking agent. As will be shown in the examples below, the replacement of sucrose with the carbohydrate bulking agent has a limited impact on the dispersibility of the powdered beverage composition, it also has limited impact on the density of the powdered beverage composition, and it allows for a reduction in the calorie density of the powdered beverage composition thanks to the increased content in dietary fibres.

The carbohydrate bulking agent comprises, on dry matter: at least 70% by weight of soluble dietary fibres (resistant dextrin), up to 20% by weight of digestible carbohydrate (maltodextrin) and less than 10% by weight of sugars. At least 50% by weight of said fibres have a molecular weight between 600 and 4000 g/mol and less than 10% by weight of said fibres have a molecular weight above 4000 g/mol. Preferably, the soluble dietary fibres comprise resistant dextrins. Soluble dietary fibres, such as resistant dextrins, allow for an increase of the fibre content and for a calorie reduction, of the powdered beverage composition.

In an embodiment, the powdered beverage composition comprises from 15 to 50 g of dietary fibres per 100 g, preferably from 25 to 50 g of dietary fibres per 100 g, more preferably from 30 to 49 g of dietary fibres per 100 g, and most preferably from 35 to 40 g of dietary fibres per 100 g. Part of the dietary fibres come from the carbohydrate bulking agent, and the remainder comes from the cocoa ingredient. The carbohydrate bulking agent may be prepared by heating starches at high temperature followed by an enzymatic treatment with an amylase to form resistant oligosaccharides, including resistant dextrins. Examples of carbohydrate bulking agent include Promitor SGF70 (Tate & Lyle, London, United-Kingdom) or Nutriose FM10 (Roquette Frères, Lestrem, France). A preferred carbohydrate bulking agent is Promitor SGF70.

The carbohydrate bulking agent is amorphous. It came as a surprise for the inventors that an amorphous carbohydrate ingredient could replace sucrose in the composition of the invention. Indeed, amorphous carbohydrates are dense, they are hygroscopic, and their wettability at cold temperature is not as good as the wettability of sucrose. As a consequence, the inventors feared that it would be difficult to use this ingredient in an industrial process on the one hand, and on the other hand, to reconstitute a beverage in cold liquid, such as cold milk, within an acceptable timeframe, with a powdered beverage composition which would comprise such an amorphous carbohydrate ingredient. Surprisingly, the inventors found that after the agglomeration process, the powdered beverage composition of the invention could disperse almost instantaneously in cold milk when stirring, and in less than 3 minutes in the wettability test described in the examples, with only a few "floaters" remaining on the surface of milk after 3 minutes.

The powdered beverage composition also comprises lecithin. This ingredient improves the wetting properties of lipophilic powders such as cocoa powder and it helps complete dispersion in water. In an embodiment, the powdered beverage composition comprises from 0.90 to 1.7% by weight of lecithin. Preferably, the powdered beverage composition comprises from 0.95 to 1.4% by weight of lecithin, and more preferably from 1.0 to 1.3% by weight of lecithin. Preferably, powdered beverage composition comprises soya lecithin.

In a preferred embodiment, the powdered beverage composition further comprises a sweetness enhancer and/or a high intensity sweetener. The sweetness enhancer and/or the high intensity sweetener compensates for the reduced sweetness associated with the lower sucrose content of the powdered beverage composition. In addition, the powdered beverage composition may also comprise a flavour modulator. Flavour moderators are used to modify the sweetness perception as well as other flavour attributes of the powdered beverage composition.

In a preferred embodiment, the powdered beverage composition further comprises a flavour ingredient selected from salt (NaCI), cinnamon, vanilla, and mixtures thereof. For example, 100g of the dry composition may further comprise from 20 to 25 mg cinnamon powder, from 60 to 70 mg vanillin.

In an embodiment, the powdered beverage composition contains per 100 g: 8-14 µg vitamin D, 63-72 mg vitamin C, 0.6-0.8 mg vitamin B1, 245-265 mg magnesium, 15-20 mg iron, and 6-9 mg zinc.

For example, the powdered beverage composition does not contain added calcium, and/or does not contain vitamin E. "Added calcium" is a calcium salt provided as an ingredient in the composition. Examples of added calcium salts include calcium carbonate, calcium phosphate, calcium citrate, calcium lactate, and other calcium inorganic or organic salts. However, the powdered beverage composition may contain calcium as a natural constituant of one of its food ingredient, such as cocoa. Calcium may also be found in milk, when the dry composition is reconstituted in milk.

Manufacturing the powdered beverage composition may be performed with a standard agglomeration process in an agglomeration tower or a fluid bed. First, the dry ingredients are dry mixed, and then milled. Milling can be performed at a speed of 3000 to 7000 rpm, preferably between 4500 to 5500 rpm. For instance, a milling speed of 3500 rpm, 5000 rpm or 6500 rpm can be selected. Milling produces a fine powder which is then agglomerated in an agglomeration tower or a fluid bed, with steam injection. Preferably, agglomeration is performed in an agglomeration tower with steam injection, i.e. the agglomeration is steam agglomeration. The powder flow rate in the agglomeration tower may range from 250 kg/h to 600 kg/h, preferably from 300 kg/h to 500 kg/h, such as for instance about 400 kg/h. Preferably, the agglomeration tower is equipped with two steam injection inlets: a central steam injection inlet and a lateral steam injection inlet. The central steam flow rate may range from 25 kg/h to 60 kg/h, preferably from 30 to 50 kg/h. The lateral steam flow rate may range from 75 kg/h to 160 kg/h, preferably from 80 kg/h to 150kg/h. Preferably, the lateral steam flow rate is 2 to 4 times greater than the central steam flow rate. For instance, the steam flow rate is 30/80 kg/h (central/lateral).

Alternatively, the finely ground powder can be agglomerated in a fluid bed operating with steam injection.

Steam agglomeration is preferred over, e.g. water agglomeration, at least because of steam agglomeration requires less water than water agglomeration. It seems that steam agglomeration provides smaller particles than water agglomeration.

The agglomerated powder is then cooled and dried in a fluid bed, to reach a water activity Aw below 0.1, preferably below 0.09. Usually, the water activity of the dried agglomerated powder ranges from 0.04 to 0.09. Water activity is a well-known parameter in the food industry. The agglomerated powder is then filled in a packaging.

Hence, the present invention relates in part to a process of manufacturing a powdered beverage composition as described herein, which comprises a step of milling the dry ingredients followed with steam agglomeration.

The powdered beverage composition is edible, that is approved for human or animal consumption. Further, the powdered beverage composition is soluble in water or in milk.

Advantageously, the composition of the present invention - if added to milk - ideally complements the vitamins and minerals present in milk, so that the resulting beverage optimally supports a healthy growth and development in children.

For the purpose of the present invention, children may be between 4 and 14 years old, for example between 4 and 12 years old, or between 6 and 12 years old. The dry powder composition is not adapted for infants, i.e. children younger than 3 years old. In particular, the dry powder composition is not adapted for toddlers or babies. For instance, the dry powder composition is not a human milk supplement.

The powdered beverage composition is to be reconstituted in a drinkable liquid, such as water or milk. Preferably, the drinkable liquid is a cold liquid. As used in the specification, the expression "cold liquid" or "cold drinkable liquid" means refrigerated liquid, i.e. a liquid, such as milk, at a temperature of less than 10°C. Preferably, the powdered beverage composition disperses in less than 3 minutes in a cold drinkable liquid, without stirring, as explained above. In other words, once a serving of powdered beverage composition is poured into a cold liquid, the powdered beverage composition disperses quickly without leaving lumps.

Due to the optimal complementation of milk, milk is preferred as a drinkable liquid. Any kind of milk can be used, such as skim milk, semi-skim milk, or full fat milk. Preferably, skim milk or semi-skim milk is used, because of their lower fat content. Consumer with lactose intolerance may also wish to reconstitute their beverage in lactose-free milk. Preferably, cow milk is considered.

A typical serving size may be 150 to 200 mL of liquid to which the powdered beverage composition of the present invention is added. Typically, 1 to 3 teaspoons of the composition of the present invention may be added to 150 to 200 mL of milk. For example, 2 teaspoons of the composition may be added to 150 mL of milk or to 200 mL of milk. In grams, 2 teaspoons of the composition correspond to from about 10 g to about 14.5 g, for example 13.5 g.

Accordingly, the present invention relates in part to a method of preparing a beverage which comprises mixing a serving of powdered beverage composition as described above, into a drinkable liquid. A "serving" represents from 5 to 10 g of said powdered beverage composition per 100 mL of drinkable liquid.

Also, the present invention relates in part to a beverage which can be prepared by mixing the powdered beverage composition of the invention into a drinkable liquid, especially into milk. For instance, such a beverage comprises from 5 to 10 g of the powdered beverage composition in 100 mL of drinkable liquid, preferably milk. Accordingly, such a beverage comprises less than 10 g of total sugars per 100 mL of beverage, and less than 6 g of added sugar per 100 mL of beverage. As mentioned before, "total sugars" include sugars from the powdered beverage composition and sugars naturally found in milk, such as lactose and lactose. "Added sugars" include sugars found in the powdered beverage composition.

Those skilled in the art will understand that they can freely combine all features of the present invention disclosed herein. In particular, features described for the product of the present invention may be combined with the use of the present invention and vice versa. Further, features described for different embodiments of the present invention may be combined.

Furthermore, where known equivalents exist to specific features, such equivalents are incorporated as if specifically referred in this specification. Further advantages and features of the present invention are apparent from the figures and non-limiting examples.

### EXAMPLES (not part of the invention)

### Example 1: Powdered Chocolate Beverage Compositions

Several powdered beverage compositions were prepared by agglomeration with the recipes in the table below (Table 1):

**Table 1. Powdered beverage compositions**

| **RECIPE** | **Unit** | **R1** | **R2** | **R3** | **R4** | **R5** | **R6** | **R7** | **R8** | **R9** | **C1** | **C2** |
|---|---|---|---|---|---|---|---|---|---|---|---|---|
| Cocoa | g | 17 | 17 | 16 | 16 | 25.9 | 20.7 | 20.6 | 18 | 18 | 20.6 | 20.6 |
| Sucrose | g | 31.2 | 31.2 | 22.5 | 22.5 | 31 | 62.9 | 26.8 | 22.5 | 22.5 | 76.8 | 26.8 |
| Carbohydrate | g | 36 | 49.9 | 36 | 58.3 | 40.2 | 12.7 | 50 | 28.7 | 56.9 | | |
| bulking agent | | | | | | | | | | | | |
| Maltodextrin | g | 13.9 | | 23.1 | | | | | 28.2 | | | 50 |
| Lecithin | g | 1.0 | 1.0 | 1.1 | 1.1 | 1.6 | 1.3 | 1.1 | 1.1 | 1.1 | 1.1 | 1.1 |
| Salt (NaCl) | g | 0.3 | 0.3 | 0.3 | 0.3 | 0.4 | 0.4 | 0.3 | 0.3 | 0.3 | 0.3 | 0.3 |
| Flavour | g | 0.4 | 0.4 | 0.4 | 0.4 | | 0.2 | | 0.6 | 0.6 | | |
| modulator | | | | | | | | | | | | |
| Vitamins and | g | 0.2 | 0.2 | 0.3 | 0.3 | 0.6 | 1.4 | 1.2 | 0.4 | 0.4 | 1.2 | 1.2 |
| minerals | | | | | | | | | | | | |
| Flavour | g | | | 0.3 | 0.3 | 0.3 | 0.4 | | 0.2 | 0.2 | | |
| TOTAL | g | 100 | 100 | 100 | 100 | 100 | 100 | 100 | 100 | | 100 | 100 |

In recipes R1, R2, R7, C1 and C2, cocoa was a defatted alkalised cocoa purchased from ADM, and maltodextrin was a DE 18-20 maltodextrin. In recipes R3 and R4, cocoa was a defatted light-alkalised cocoa purchased from ADM, and maltodextrin was a DE 12 maltodextrin. In recipes R5 and R6, cocoa was a defatted alkalised cocoa purchased from ADM. In recipes R8 and R9, cocoa was a defatted alkalised cocoa purchased from ADM, and maltodextrin was a DE 12 maltodextrin.

In recipes R1 to R6, R8 and R9, the carbohydrate bulking agent was PROMITOR SGF 70 from Tate & Lyle, and the flavour modulator was supplied from Symrise or from Firmenich. Two variants of recipe R7 were prepared, either with PROMITOR SGF 70 from Tate & Lyle (R7P), or with Nutriose FM10 from Roquette Frères (R7N), as the carbohydrate bulking agent.

The flavour comprises vanilla flavour, vanillin, and/or ground cinnamon.

The vitamins and minerals comprise a vitamin premix bringing, per 100 gram of powdered beverage composition: 8-14 µg vitamin D, 63-72 mg vitamin C, 0.6-0.8 mg vitamin B1. The vitamins and minerals also comprise ferric pyrophosphate, zinc sulphate (hydrate), and magnesium carbonate, bringing, per 100 gram of powdered beverage composition: 245-265 mg magnesium, 15-20 mg iron, and 6-9 mg zinc.

Recipe C1 is a standard beverage composition without sucrose replacement (first comparative recipe). Recipe C2 is another standard beverage composition where sucrose is partially replaced with maltodextrin (second comparative recipe).

The content in sugars, maltodextrin, resistant dextrins and dietary fibres, in g/100g of the powdered beverage compositions made according to recipes R1 to R9, C1 and C2 is shown in the table below (Table 2).

**Table 2. Carbohydrates content in the powdered beverage compositions of Example 1 (all in wt% of the powdered beverage composition, dry weight)**

| **RECIPE** | **R1** | **R2** | **R3** | **R4** | **R5** | **R6** | **R7P** | **R7N** | **R8** | **R9** | **C1** | **C2** |
|---|---|---|---|---|---|---|---|---|---|---|---|---|
| Sugars | 36 | 36.2 | 26.6 | 27.9 | 35 | 64 | 31.3 | 31.3 | 26.8 | 28.3 | 77.7 | 32 |
| Maltodextrin | 21 | 12.4 | 30.2 | 11.6 | 9.9 | 3.6 | 10 | 10 | 32.1 | 10.7 | 0 | 50 |
| Resistant dextrin | 24 | 32.8 | 25.2 | 40.8 | 26.4 | 8.4 | 32.5 | 32.5 | 18.9 | 37.4 | 0 | 0 |
| Dietary fibres | 29.3 | 38.5 | 30.4 | 45.9 | 35 | 15.2 | 39 | 39 | 24.9 | 43.4 | 5.7 | 6.9 |

The powdered beverage compositions are prepared as follows. Ingredients are first dry mixed and then milled at a speed of 5000 rpm. Agglomeration of the fine powder is performed in an agglomeration tower with steam injection followed by drying and cooling in fluid beds. The powder flow rate in the agglomeration tower was 400 kg/h. The vapour flow rate was 30 kg/h (central steam flow rate) and 80 kg/h (lateral steam flow rate). The agglomerated powder is then filled in a packaging.

### Example 2: Wettability Tests

### 2.1 Description of the wettability test

The objective of this method is to provide a rapid indication of how well the powdered chocolate beverage composition weights under conditions close to the consumers experience. This method provides a semi-quantitative evaluation of powder wettability based on visual scale shown on figure 1 and explained in Table 3 below.

To prepare the sample:
- weigh 15 g of powder and put it into the powder dispenser;
- pour 200 mL of refrigerated milk in a 250 mL glass beaker;
- remove any bubbles from the surface of the milk with a clean spoon;
- wait for the milk temperature to rise to 10°C;
- position the powder dispenser above the glass beaker, without touching it, as maximum distance of 10 mm;
- dispense the powder onto the milk with one quick movement;
- assess the wettability score based on the visual scale, 45 seconds after dispensing the powder into milk and three minutes after dispensing the powder into milk;
- repeat twice.

**Table 3. Visual scale for wettability score**

| **Wettability Score** | **Description** |
|---|---|
| A (xx s) | No dry powder on milk surface (time of submersion is noted) |
| B (xx %) | Less than 50% of the milk surface is covered (% of surface covered assessed) |
| C (xx %) | More than 50% of the milk surface is covered (% of surface covered assessed) |
| D | All the milk surface is covered |

| | |
|---|---|
| A (xx s): No dry powder remained on the surface of the milk xx seconds after dispensing the powder B (xx %) or C (xx %): 3 minutes after dispensing the powder, xx % of the surface of the milk was still covered with dry powder ("floaters") | |

### 2.2 Results

Recipes R7P, R7N, C1 and C2 were tested following the wettability test. Results are shown in Table 4 below:

**Table 4. Wettability results**

| Days of storage | Time after dispensing | C1 | C2 | R7P | R7N |
|---|---|---|---|---|---|
| 3 | 45 sec | A (47 s) | D | B (5%) | D |
| 3 | 3 min | - | D | B (5%) | D |
| 12 | 45 sec | B (20%) | D | C (80%) | D |
| 12 | 3 min | A (135 s) | D | C (50%) | D |
| 45 | 45 sec | B (25%) | D | B (35%) | D |
| 45 | 3 min | A (160 s) | D | B (25%) | D |
| 65 | 45 sec | B (20%) | D | B (60%) | D |
| 65 | 3 min | A (145 s) | D | B (50%) | D |

As can be seen from the wettability results, although wettability of recipe R7P is not as good as that of the reference composition C1, it is still much better than the wettability of the reference composition C2. It is indirect evidence that the powdered beverage composition R7P will not form lumps upon reconstitution into milk. Wettability of recipe R7P was considered acceptable, knowing that usually, consumers will stir their beverage in order to prepare it faster.

Wettability of powdered beverage compositions R1 to R6 was similar to that of recipe R7P, and was considered acceptable.

### Example 3: Preparation of Chocolate Beverages

Powdered beverage compositions R1 to R6, C1 and C2 (example 1), were used to prepare a chocolate beverage by stirring a serving of the powdered beverage composition into cold milk. The serving sizes and the volumes of milk used are indicated in Table 5, together with nutritional information on the reconstituted chocolate beverages:

**Table 5. Serving size for reconstitution of a chocolate beverage**

| **RECIPE** | **Unit** | **R1** | **R2** | **R3** | **R4** | **R5** | **R6** | **R8** | **R9** | **C1** | **C2** |
|---|---|---|---|---|---|---|---|---|---|---|---|
| Serving size | g | 13.6 | 13.6 | 13.5 | 13.5 | 10.7 | 10 | 13.5 | 13.5 | 13.5 | 13.5 |
| Milk | mL | 150 | 150 | 200 | 200 | 200 | 200 | 200 | 200 | 200 | 200 |
| Sugars* | g/100 mL | 8.1 | 8.1 | 6.6 | 6.7 | 6.6 | 8 | 6.6 | 6.7 | 10.1 | 7.1 |
| Maltodextrin | g/100 mL | 1.9 | 1.1 | 2.0 | 0.8 | 0.5 | 0.1 | 2.2 | 0.7 | 0 | 3 |
| Resistant dextrin | g/100 mL | 2.1 | 3.0 | 1.7 | 2.8 | 1.4 | 0.4 | 1.3 | 2.5 | 0 | 0 |
| Dietary fibres | g/100 mL | 2.7 | 3.5 | 2.1 | 3.1 | 1.9 | 0.8 | 1.7 | 2.9 | 0.4 | 0.5 |
| Sugar reduction over recipe C1 | % | 33% | 33% | 33% | 34% | 32% | 20% | 35% | 34% | n/a | n/a |

| | | | | | | | | | | | |
|---|---|---|---|---|---|---|---|---|---|---|---|
| * Sugar content in the reconstituted beverage, i.e. including sugars naturally occurring in milk (lactose, galactose) n/a: not applicable | | | | | | | | | | | |

Reconstitution was performed without apparition of lumps, except with comparative recipe C2, where it was necessary to stir the beverage a bit more vigorously than with the other recipes. For recipes R1 to R6, the powdered beverage composition was dissolved/dispersed in cold milk (at 5-10°C) in a few seconds only.

The chocolate beverages were tasted by trained panellists, who compared recipes R1 to R6 with standard references, including comparative recipe C1. The panellists found that the low-sugar beverages R1 to R6 had a comparable flavour profile and mouthfeel to the standard chocolate beverage.

As can be seen from Table 5, the chocolate beverages contains, after reconstitution, up to 35% less sugars, and at least 20% less sugars, when compared with the reference beverage made with the powdered beverage composition C1.

Also, the chocolate beverages contain from 2 to 9 times more dietary fibres, when compared with the reference beverage made with the powdered beverage composition C1. For instance, a serving of chocolate beverage according to the invention may contain from 0.8 to 3.5 g of dietary fibres per 100 mL of beverage, preferably from 1.5 to 3.5 g of dietary fibres per 100 mL of beverage. It is worth noting that part of the dietary fibres is resistant dextrins which are non-digestible fibres. Resistant dextrins have a low contribution to the calorie density of the powdered beverage composition. Hence, consuming such a low-sugar beverage allows for a reduction of the calorie input, whilst an acceptable flavour profile and dispersibility is maintained when compared with a reference powdered beverage composition.

### Example 4: Density Tests

Bulk density is not an intrinsic property of powdered materials; it depends on how the material is handled. For instance, bulk density may increase as a consequence of vibrations during transport.

The bulk density of the powdered beverage compositions was assessed "freely settled" (untapped density) and "tapped".

For instance, untapped density may be measured by pouring 100 g of powdered beverage composition into a graduated 250 mL cylinder using a powder funnel. The volume occupied by the powder is noted. This allows calculating the untapped density of the powdered beverage composition. Then, the graduated cylinder is secured on a jolting volumeter, is tapped a predetermined number of times (for instance 200 times), and the volume of the tapped powdered beverage composition is noted again. This allows calculating the tapped density of the powdered beverage composition.

The tapped density of the powdered beverage composition according to recipes R7P, C1 and C2 were measured. Depending on the repetition, a tapped density of between 430 and 440 g/L was measured for recipe C1, of between 475 and 480 g/L for recipe C2, and of 408 and 430 g/L for recipe R7P.

These results show that replacing sucrose with the carbohydrate bulking agent has a limited impact on the tapped density of the product. This is important for processing purposes and for packing purposes because it means that the current packaging sizes are still adapted to the low-sugar recipes. It is also important for consumers: as the powdered beverage composition has the usual density, consumers are not tempted to increase the serving size to compensate for a perceived lower weight.

### Bibliography

- CDC (2010). The CDC Guide to Strategies for Reducing the Consumption of Sugar-Sweetened Beverages.
- EFSA, Panel on Dietetic Products, Nutrition, and Allergies (NDA) (2010). Scientific Opinion on Dietary Reference Values for carbohydrates and dietary fibre. EFSA Journal 8(3):1462 s.
- EFSA, Panel on Dietetic Products, Nutrition, and Allergies (NDA) (2011). Scientific Opinion on the substantiation of health claims related to resistant maltodextrin (...). EFSA Journal 9(4):2070 s.
- FAO/WHO (2003). Diet, Nutrition and the Prevention of Chronic Diseases. Report of a Joint WHO/FAO Expert Consultation, Jan. 28-Feb. 1, 2002, Geneva (CH). Food and Agriculture Organisation of the United Nations (FAO), Rome (IT) / World Health Organisation (WHO), Geneva (CH), WHO Technical Report Series, No. 916.
- IOM (2002/2005). Dietary carbohydrates: sugars and starches. In: Dietary Reference Intakes for Energy, Carbohydrate, Fibre, Fat, Fatty Acids, Cholesterol, Protein and Amino Acids (Macronutrients). Washington (DC); National Academy Press (NAP), Food and Nutrition Board (FNB), Institute of Medicine (IOM).
- Te Morenga et al. (2013). Dietary sugars and body weight: systematic review and meta-analyses of randomised controlled trials and cohort studies. BMJ 346:e7492.
- WHO (2013). Global NCD action plan 2013-2020. World Health Assembly Resolution WHA A66.10.
- WHO (2014). Draft Guidelines for public consultation: Sugars intake for adults and children. March 5.

## Claims

1. A powdered beverage composition comprising:
- from 15 to 30 % by weight of cocoa,
- from 20 to 65 % by weight of sugars, from 8 to 45 % by weight of resistant dextrins, and from 2 to 35 % by weight of maltodextrins, wherein total carbohydrates represent from 70 to 85 % by weight of the composition, wherein said resistant dextrins are amorphous
- from 0.90 to 1.7 % by weight of lecithin.

2. The composition according to claim 1, which comprises from 15 to 50 g of dietary fibres per 100 g.

3. The composition according to claim 1 or 2, wherein said cocoa is defatted cocoa.

4. The composition according to any one of claims 1 to 3, further comprising a sweetness enhancer, a high intensity sweetener and/or a flavour modulator.

5. The composition according to any one of claims 1 to 4, further comprising a flavour ingredient selected from salt (NaCI), cinnamon, vanilla, and mixtures thereof.

6. The composition according to any one of claims 1 to 5, wherein the composition is agglomerated.

7. The composition according to any one of claims 1 to 6, wherein the composition is to be reconstituted in a drinkable liquid, preferably milk.

8. The composition according to any one of claims 1 to 7, wherein the composition contains per 100g: 8-14 µg vitamin D, 63-72 mg vitamin C, 0.6-0.8 mg vitamine B1, 245-265 mg magnesium, 15-20 mg iron, and 6-9 mg zinc.

9. The composition according to any one of claims 1 to 8, wherein the composition disperses in less than 3 minutes in cold milk, according to the wettability test.

10. A beverage which comprises from 5 to 10 g of the powdered composition according to any one of claims 1 to 9, in 100mL of drinkable liquid, wherein said beverage comprises less than 10 g of total sugars per 100 mL of beverage, and less than 6 g of added sugar per 100 mL of beverage.

11. A process of manufacturing a powdered beverage composition according to any one of claims 1 to 8, which comprises a step of milling the dry ingredients followed with steam agglomeration.

## Patentansprüche

1. Pulverförmige Getränkezusammensetzung, umfassend:
- von 15 bis 30 Gew.-% Kakao,
- von 20 bis 65 Gew.-% Zucker, von 8 bis 45 Gew.-% resistente Dextrine und von 2 bis 35 Gew.-% Maltodextrine, wobei Gesamtkohlenhydrate von 70 bis 85 Gew.-% der Zusammensetzung darstellen, wobei die resistenten Dextrine amorph sind
- von 0,90 bis 1,7 Gew.-% Lecithin.

2. Zusammensetzung nach Anspruch 1, die pro 100 g 15 bis 50 g Ballaststoffe umfasst.

3. Zusammensetzung nach Anspruch 1 oder 2, wobei der Kakao entfetteter Kakao ist.

4. Zusammensetzung nach einem der Ansprüche 1 bis 3, ferner umfassend eine Süßkraftverstärker, einen hochintensiven Süßstoff und/oder einen Aromamodulator.

5. Zusammensetzung nach einem der Ansprüche 1 bis 4, ferner umfassend einen Geschmacksstoff, ausgewählt aus Salz (NaCl), Zimt, Vanille und Mischungen davon.

6. Zusammensetzung nach einem der Ansprüche 1 bis 5, wobei die Zusammensetzung agglomeriert ist.

7. Zusammensetzung nach einem der Ansprüche 1 bis 6, wobei die Zusammensetzung in einer trinkbaren Flüssigkeit, vorzugsweise Milch, zu rekonstituieren ist.

8. Zusammensetzung nach einem der Ansprüche 1 bis 7, wobei die Zusammensetzung pro 100 g enthält: 8 bis 14 µg Vitamin D, 63 bis 72 mg Vitamin C, 0,6 bis 0,8 mg Vitamin B1, 245 bis 265 mg Magnesium, 15 bis 20 mg Eisen und 6 bis 9 mg Zink.

9. Zusammensetzung nach einem der Ansprüche 1 bis 8, wobei die Zusammensetzung gemäß dem Benetzbarkeitstest in weniger als 3 Minuten in kalter Milch dispergiert.

10. Getränk, das 5 bis 10 g der pulverförmigen Zusammensetzung nach einem der Ansprüche 1 bis 9 in 100 ml trinkbarer Flüssigkeit umfasst, wobei das Getränk weniger als 10 g Gesamtzucker pro 100 ml Getränk und weniger als 6 g zugesetzten Zuckers pro 100 ml Getränk umfasst.

11. Verfahren zum Herstellen einer pulverförmigen Getränkezusammensetzung nach einem der Ansprüche 1 bis 8, das einen Schritt zum Mahlen der trockenen Bestandteile, gefolgt von einer Dampfagglomeration, umfasst.

## Revendications

1. Composition de boisson en poudre comprenant :
- de 15 à 30 % en poids de cacao,
- de 20 à 65 % en poids de sucres, de 8 à 45 % en poids de dextrines résistantes et de 2 à 35 % en poids de maltodextrines, dans laquelle les glucides totaux représentent de 70 à 85 % en poids de la composition, dans laquelle lesdites dextrines résistantes sont amorphes
- de 0,90 à 1,7 % en poids de lécithine.

2. Composition selon la revendication 1, qui comprend de 15 à 50 g de fibres alimentaires pour 100 g.

3. Composition selon la revendication 1 ou 2, dans laquelle ledit cacao est du cacao dégraissé.

4. Composition selon l'une quelconque des revendications 1 à 3, comprenant en outre un exhausteur de sucrosité, un édulcorant de haute intensité et/ou un modulateur d'arôme.

5. Composition selon l'une quelconque des revendications 1 à 4, comprenant en outre un ingrédient aromatique choisi parmi un sel (NaCI), de la cannelle, de la vanille et des mélanges de ceux-ci.

6. Composition selon l'une quelconque des revendications 1 à 5, dans laquelle la composition est agglomérée.

7. Composition selon l'une quelconque des revendications 1 à 6, dans laquelle la composition est destinée à être reconstituée dans un liquide buvable, de préférence du lait.

8. Composition selon l'une quelconque des revendications 1 à 7, dans laquelle la composition contient pour 100 g : 8 à 14 µg de vitamine D, 63 à 72 mg de vitamine C, 0,6 à 0,8 mg de vitamine B1, 245 à 265 mg de magnésium, 15 à 20 mg de fer et 6 à 9 mg de zinc.

9. Composition selon l'une quelconque des revendications 1 à 8, dans laquelle la composition se disperse en moins de 3 minutes dans du lait froid, selon le test de mouillabilité.

10. Boisson qui comprend de 5 à 10 g de la composition en poudre selon l'une quelconque des revendications 1 à 9, dans 100 mL de liquide buvable, dans laquelle ladite boisson comprend moins de 10 g de sucres totaux pour 100 mL de boisson et moins de 6 g de sucre ajouté pour 100 mL de boisson.

11. Procédé de fabrication d'une composition de boisson en poudre selon l'une quelconque des revendications 1 à 8, qui comprend une étape consistant à moudre les ingrédients secs suivie d'une agglomération à la vapeur.
